# EUROPÄISCHE PATENTANMELDUNG

(11) **EP 3 235 374 A1**
(43) Veröffentlichungstag der Anmeldung: **25.10.2017**
(21) Anmeldenummer: 17165041.9
(22) Anmeldetag: 05.04.2017
(51) Int. Cl.: A01J 25/06, A01J 25/10

(54) **KÄSEFERTIGER**

(30) Priorität: 21.04.2016 CH 5272016
(71) Anmelder: Kalt Maschinenbau AG, 9604 Lütisburg (CH)
(72) Erfinder: Köng, Martin, 9200 Gossau (CH)
(74) Vertreter: Frommhold, Joachim

(57) **Zusammenfassung**

Die Erfindung betrifft einen Käsefertiger (1) mit einem Behälterinnenraum in Form einer Käsewanne oder eines Käsekessels (2), in dem ein angetriebenes Rührwerk mit mindestens einem Rühr- und Schneidflügel drehbar angeordnet ist.

Der Käsefertiger (1) soll einfach aufgebaut und betreibbar sein und auch hohen hygienischen Anforderungen genügen. Dies ist dadurch gelöst, dass der Rühr- und Schneidflügel (6) mit einem, von diesem lösbaren Fenster (21) versehen ist, das relativ zum Rühr- und Schneidflügel (6) bewegbar ist.

## Beschreibung

Die Erfindung betrifft einen Käsefertiger mit einem Behälterinnenraum in Form einer Käsewanne oder eines Käsekessels, nach dem Oberbegriff des Patentanspruchs 1.

Zur Käseherstellung wird Milch in einem Käsekessel, einem Käsefertiger Lab zugesetzt und die Milch wird für den Käsungsprozess mittels Rühr- und Schneidflügel ständig gerührt. Entstehende gallertartige Käsebrocken werden mittels der Rühr- und Schneidflügel geschnitten, siehe zum Beispiel DE 29812845 U1. Beim Schneiden wird der Käsebruch in Körner zerschnitten, möglichst in Körner mit gleichmässiger Grösse. Der Käsebruch wird unter Einwirkung des Labs und von Wärme fest, spröde und zerbrechlich. Dieser Käsebruch ist somit empfindlich gegen mechanische Beanspruchung, so dass der Rührvorgang schonend erfolgt. Schonend muss auch die Molke abgesaugt werden, um die Käsebruchstücke in einen stabilen körnigen Zustand zu überführen.

Die Absaugung der Molke erfolgt gemäss CH 573142 A mittels einer Ablassvorrichtung, bei der die Molke durch einen, von einem Siebmantel umgebenen Molkesammelraum, der mit einer Ablaufleitung verbunden ist, abgesaugt wird. Der Siebmantel soll das Eindringen von Käsebruch in den Molkesammelraum verhindern.

Der Käsebruch kann jedoch zur Verstopfung der Siebfläche führen. Um dies zu vermeiden, kann die Ablassvorrichtung alternierende Schwenkbewegungen im Käsekessel ausführen (CH 573142 A), der Siebmantel oder die Ablassvorrichtung rotierend ausgebildet sein (DE 29812845 U1 oder FR 2146532 A).

Gemeinsam ist diesen Vorschlägen, dass die Ablassvorrichtung zur Molkeabsaugung in den Arbeitsbereich der Rühr- und Schneidflügel eingesetzt wird und die Rühr- und Schneidflügel daher während des Absaugens im Stillstand befindlich sein müssen.

Zur Meidung dieses Nachteils wurde auch vorgeschlagen, die Ablassvorrichtung resp. den Molkesammelraum in einer Einbuchtung der Käsekesselwand anzuordnen, so dass sie nicht mit dem drehenden Rührwerk in Berührung gelangen kann (DE 821572), welches auch telekopierbar ausgebildet sein kann (DE878577). Vorrichtungen dieser Art sind jedoch besonders verstopfungsanfällig, da sich die Sieböffnungen leicht mit Käsebruchstücken zusetzen können.

Der Erfindung liegt die Aufgabe zugrunde, einen Käsefertiger zu entwickeln, der die geschilderten Nachteile des Standes der Technik meidet, entsprechend einfach betreibbar und einfach aufgebaut ist, und der auch hohen hygienischen Anforderungen genügt.

Die Aufgabe ist mit den kennzeichnenden Merkmalen des Patentanspruchs 1 gelöst.

Ein erfindungsgemässer Käsefertiger weist ein Rührwerk mit mindestens einen Rühr- und Schneidflügel auf, der mit einem, von diesem lösbaren, ggf. vollständig entfernbaren Fenster versehen ist. Dieses Fenster ist so angeordnet, dass der Rühr- und Schneidflügel bei eingesetzter Molkeablassvorrichtung behinderungsfrei im Käsekessel drehbar ist.

Der erfindungsgemässe Rühr- und Schneidflügel ermöglicht einen guten Molkeabfluss ohne Stillstand des Rühr- und Schneidflügel während des Absaugens der Molke und ist andererseits leicht und vollständig reinigbar resp. CIPfähig.
Der erfindungsgemässe Käsefertiger ist insbesondere auch zur Herstellung von hochgebranntem (bezogen auf die Temperatur) Käse, d. h. von Hartkäse geeignet.

Bevorzugte Ausgestaltungen sind in den abhängigen Ansprüchen offenbart.
Vorzugsweise ist das Rührwerk als Doppelrührwerk mit einem linken und einem rechten Rühr- und Schneidflügel ausgebildet. Bevorzugt ist die Ablassvorrichtung schwenk- oder hubfähig am Käsekessel angeordnet.

Die Erfindung wird nachfolgend in einem Ausführungsbeispiel näher beschrieben. In der Zeichnung zeigen die
- Fig. 1:: einen erfindungsgemässen Käsefertiger in Seitenansicht,
- Fig. 2:: einen erfindungsgemässen Käsefertiger von oben,
- Fig. 3:: einen erfindungsgemässen Rühr- und Schneidflügel,
- Fig. 4:: den Rühr- und Schneidflügel nach Fig. 3 von vorn gesehen.

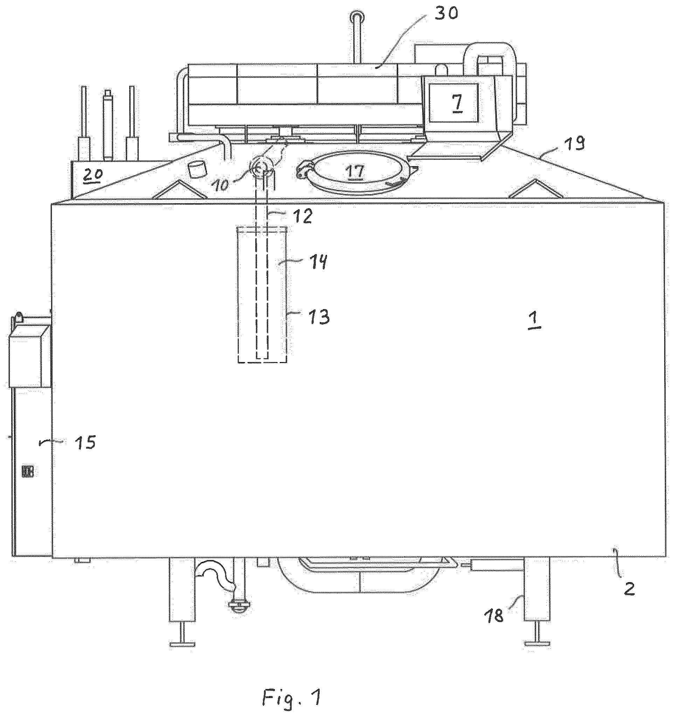

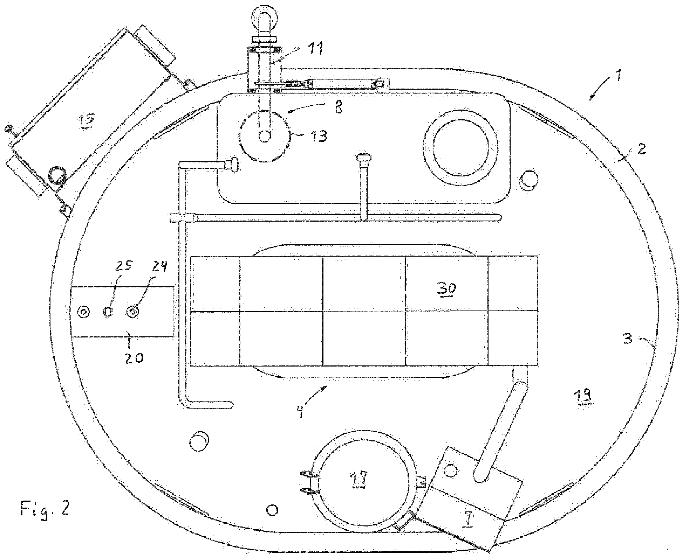

Ein erfindungsgemässer Käsefertiger 1 (Fig. 1, 2) umfasst einen Käsekessel 2, der über Füsse 18 auf dem Boden aufstellbar ist und dessen Behälterinnenraum 16 mittels einer Haube 19 abgedeckt ist. Die Haube 19 ist mit einer schliessbaren Sichtluke 16 versehen, die ein Gitter aufweist. Der Käsefertiger 1 umfasst weiterhin eine Steuerung 15 und ein Steuerpanel 7 mit einem Touchscreen.

Der Käsekessel 2 besitzt eine senkrechte Behälterwand 3, die sich aus zwei, in Draufsicht, kreisbogenabschnittsförmigen Wandteilen zusammensetzt und nach unten von einem, nicht näher bezeichneten Behälterboden begrenzt ist.

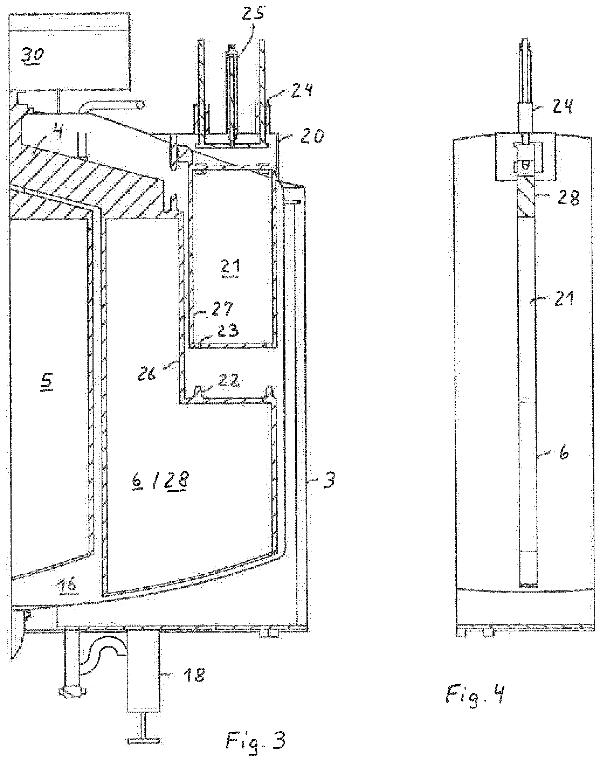

In den Käsekessel 2 ragt ein, in der Haube 19 abgestütztes Doppelrührwerk 4, dessen Drehachse parallel zur senkrechten Behälterwand 3 gelegen ist. Ein Antrieb 30 des Doppelrührwerks 4 ist ebenfalls in der Haube 19 angeordnet. Das Doppelrührwerk 4 umfasst einen linken und einen rechten Rühr- und Schneidflügel 5, 6 (Fig. 3), mit denen die Milch in bekannter Weise gerührt und die entstehenden gallertartigen Käsebrocken werden in ebenfalls bekannter Weise mittels der Rühr- und Schneidflügel 5, 6 geschnitten.

Der Käsefertiger 1 ist weiterhin mit einer Molkeablassvorrichtung 8 versehen, die mittels eines Schwenkzylinders 9 um eine Achse 10 schwenkbar in der Haube 19 angeordnet ist. Die Molkeablassvorrichtung 8 umfasst einen zylindrigen Siebmantel 13, der einen zylindrischen Molkesammelraum 14 bildet und der mit einer Ablaufleitung 12 verbunden ist, die in ein Ablaufrohr 11 mündet. In ruhender Position ist die Molkeablassvorrichtung 8 ausserhalb der eingefüllten Milch, etwa parallel zur Ebene der Haube 19 angeordnet. Ggf. kann der Siebmantel 14 mit dem Molkesammelraum 14 auch als rotierbarer Siebkorb ausgebildet sein.

Zur Absaugung von Molke wird der Siebmantel 13 mittels des Schwenkzylinders 9 etwa 90° in das Gemisch aus Käsebruch und Molke geschwenkt. Die nach Absaugung verbleibende Molke wird mit dem Käsebruch in üblicher Weise mittels eines nicht näher bezeichneten Grundablasses aus dem Käsekessel 2 abgesaugt und zu Käseformen einer Käsepresse geleitet.

Die Rühr- und Schneidflügel 5, 6 laufen jeweils angetrieben im Behälterinnenraum 16 gegeneinander, jeweils im Kreismittelpunkt der kreisbogenabschnittsförmigen Wandteile angeordnete vertikale Drehachsen um und durchlaufen dabei einander überlappende Arbeitskreise. Der Umlauf der Rühr- und Schneidflügel 5, 6 erfolgt dergestalt, dass sämtliche, vom Gemisch aus Käsebruch und Molke erfüllten Bereiche des Behälterinnenraums 16 von den Werkzeugen zum Rühren und Schneiden erfasst werden.

Der eine, im Ausführungsbeispiel der rechte Rühr- und Schneidflügel 6 ist zweiteilig ausgebildet und besteht aus einem fest angeordneten Flügel 28 und einem formergänzenden, von diesem lösbaren Fenster 21 (Flügelelement), siehe Fig. 3. Das Fenster 21 ist mittels einer, nicht näher dargestellten Führung und einer Positioniereinrichtung mit dem Flügel 28 verbunden. Die Positioniereinrichtung ist durch Positionierzapfen 22 in einem Rahmen 26 des Flügels 28 und formentsprechenden Positionierbohrungen 23 in einem Rahmen 27 des Fensters 21, wobei die Anordnung von Positionierzapfen 22 und Positionierbohrungen 23 auch umgekehrt erfolgen kann. Weiterhin ist das Fenster 21 mit einer Hubführung 24 verbunden, die an bzw. in einer Konsole 20 der Haube 19 angeordnet ist. Die Hubführung 24 ist mit einem Hubzylinder 25 verbunden, so dass das Fenster 21 relativ zum Flügel 28 bewegbar ist.

Sobald Molke aus dem Behälterinnenraum 16 des Käsekessels 2 abgesaugt werden soll, wird einerseits der Siebmantel 13 mit dem Molkesammelraum 14 mittels des Schwenkzylinders 9 in die Molke geschwenkt und andererseits das Fenster 21 mittels des Hubzylinders 25 soweit vom Flügel 28 abgehoben, dass die Drehbewegung der Rühr- und Schneidflügel 5, 6 ohne Kollision mit der Molkeablassvorrichtung 8 resp. ohne Störung der Molkeabsaugung fortgesetzt werden kann.

Ggf. kann die Hubbewegung des Fensters 21 auch mit einer Schwenkbewegung desselben kombiniert werden oder alternativ nur als Schwenkbewegung erfolgen.

### Bezugszeichenliste:

- 1: Käsefertiger
- 2: Käsekessel
- 3: Behälterwand
- 4: Doppelrührwerk
- 5: linker Rühr- und Schneidflügel
- 6: rechter Rühr- und Schneidflügel
- 7: Steuerpanel
- 8: Molkeablassvorrichtung
- 9: Schwenkzylinder
- 10: Achse
- 11: Ablaufrohr
- 12: Ablaufleitung
- 13: Siebmantel
- 14: Molkesammelraum
- 15: Steuerung
- 16: Behälterinnenraum
- 17: Sichtluke
- 18: Fuss
- 19: Haube
- 20: Konsole
- 21: Fenster
- 22: Positionierzapfen
- 23: Positionierbohrung
- 24: Hubführung
- 25: Hubzylinder
- 26: Rahmen
- 27: Rahmen
- 28: Flügel
- 30: Antrieb

## Patentansprüche

1. Käsefertiger, der mit einem Behälterinnenraum (16) in Form einer Käsewanne oder eines Käsekessels (2) versehen ist, in dem ein Rührwerk mit mindestens einem drehbar angetriebenen Rühr- und Schneidflügel angeordnet ist,
**dadurch gekennzeichnet, dass** der Rühr- und Schneidflügel (6) mit einem, von diesem lösbaren Fenster (21) versehen ist, das relativ zum Rühr- und Schneidflügel (6) bewegbar ist.

2. Käsefertiger nach Anspruch 1, **dadurch gekennzeichnet, dass** das Rührwerk als Doppelrührwerk (4) mit einem linken Rühr-und Schneidflügel (5) und einem rechten Rühr- und Schneidflügel (6) ausgebildet ist, wobei das Fester (21) dem rechten Rühr- und Schneidflügel (6) zugeordnet ist.

3. Käsefertiger nach Anspruch 1 oder 2, **dadurch gekennzeichnet, dass** das Fenster (21) mittels einer Führung und einer Positioniereinrichtung mit einem Flügel (28) des Rühr- und Schneidflügels (6) verbindbar ist.

4. Käsefertiger nach einem der Ansprüche 1 bis 3, **dadurch gekennzeichnet, dass** das Fenster (21) hub- und/oder schwenkfähig angeordnet und an einer Haube (19) des Käsefertigers (1) gehangen ist.

5. Käsefertiger nach einem der Ansprüche 1 bis 4, **dadurch gekennzeichnet, dass** die Relativbewegung des Fensters (21) mit der Handhabung einer Molkeablassvorrichtung (8) koppelbar ist.

6. Käsefertiger nach einem der Ansprüche 1 bis 5, **dadurch gekennzeichnet, dass** der Arbeitsraum des Rühr- und Schneidflügels (6) kollisionsfrei zum Arbeitsraum der Molkeablassvorrichtung (8) im Behälterinnenraum (16) ausgebildet ist.
